(19) Europäisches Patentamt
European Patent Office
Office européen des brevets

(11) **EP 3 387 773 B1**

(12) **FASCICULE DE BREVET EUROPEEN**

(45) Date de publication et mention
de la délivrance du brevet:
**24.03.2021 Bulletin 2021/12**

(21) Numéro de dépôt: **16825817.6**

(22) Date de dépôt: **09.12.2016**

(51) Int Cl.:
**H04L 1/18** (2006.01)    **H04L 1/00** (2006.01)

(86) Numéro de dépôt international:
**PCT/FR2016/053313**

(87) Numéro de publication internationale:
**WO 2017/098188 (15.06.2017 Gazette 2017/24)**

(54) **PROCEDE, DISPOSITIF DE RELAYAGE ET DESTINATAIRE AVEC RETOUR DANS UN SYSTEME OMAMRC**

WEITERLEITUNGSVERFAHREN UND -VORRICHTUNG UND EMPFÄNGER MIT RÜCKFÜHRUNG IN EINEM OMAMRC-SYSTEM

RELAYING METHOD AND DEVICE AND RECIPIENT WITH RETURN IN AN OMAMRC SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2015 FR 1562224**

(43) Date de publication de la demande:
**17.10.2018 Bulletin 2018/42**

(73) Titulaire: **ORANGE**
**75015 Paris (FR)**

(72) Inventeurs:
• **MOHAMAD, Abdulaziz**
**92260 Fontenay Aux Roses (FR)**
• **VISOZ, Raphaël**
**92170 Vanves (FR)**
• **BERTHET, Antoine**
**92290 Chatenay Malabry (FR)**

(56) Documents cités:
EP-A1- 2 733 881    US-A1- 2006 291 440
US-A1- 2013 250 776    US-A1- 2013 322 321
US-B1- 7 924 761

## Description

La présente invention se rapporte au domaine des communications numériques. Au sein de ce domaine, l'invention se rapporte plus particulièrement à la transmission de données codées entre des sources et une destination avec relayage par des relais, les communications associées sont dites coopératives. L'invention concerne des systèmes à plusieurs sources, un ou plusieurs relais et une destination.

Le principe de coopération entre des nœuds d'un réseau sans fil fait encore l'objet de recherches actives. Bien qu'il soit largement reconnu que la coopération augmente l'efficacité spectrale grâce au gain de codage et la fiabilité grâce au gain de diversité de la transmission, il reste à trouver une stratégie de coopération qui maximise les gains.

Il existe de nombreuses techniques de relayage connues sous leur appellation anglo-saxonne : « amplify and forward », « décodé and forward », « compress-and-forward », « non-orthogonal amplify and forward », « dynamic decode and forward », etc.

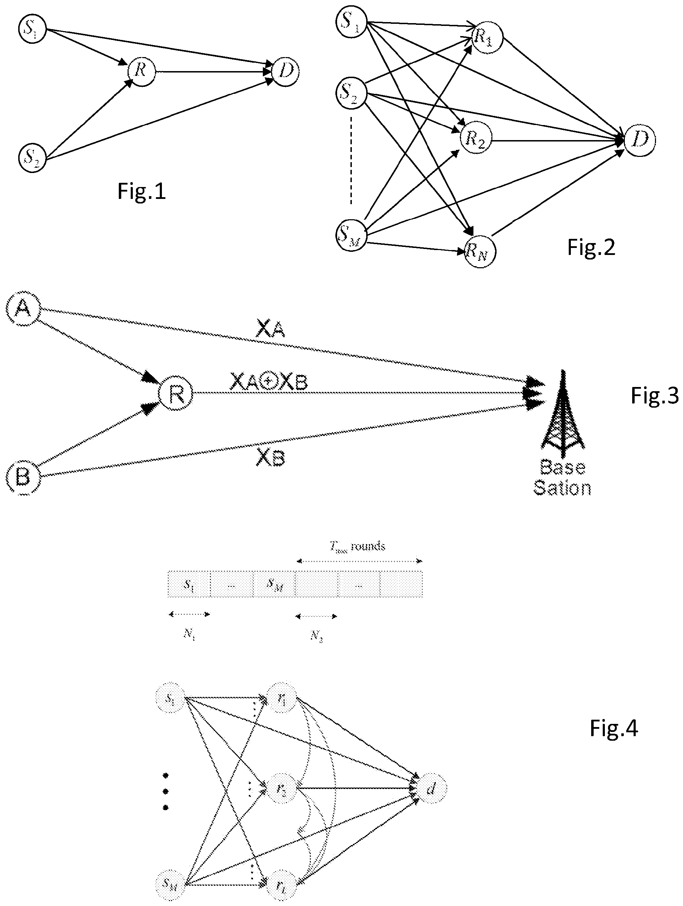

L'invention s'applique notamment, mais non exclusivement, à la transmission de données via des réseaux mobiles, par exemple pour des applications temps réel, ou via par exemple des réseaux de capteurs. Le réseau est un réseau multi-utilisateurs, constitué de plusieurs sources, un ou plusieurs relais et un destinataire (modèle MARC illustré par la figure 1 ou MAMRC - « *Multiple-Access Multiple-Relay Channel* » illustré par la figure 2 utilisant un schéma d'accès multiple orthogonal du canal de transmission entre les relais et la destination, noté OMAMRC (« *Orthogonal Multiple-Access Multiple-Relay Channel* ») quand il y a plusieurs relais. Le système de transmission considéré comporte au moins quatre nœuds mettant en œuvre une stratégie de coopération dite IR-HARQ (Incremental Redundancy Hybrid-ARQ selon la terminologie anglosaxonne) basée sur un relayage sélectif dit SDF (Selective Decode and Forward selon la terminologie anglosaxonne).

Dans ce type de coopération, les sources indépendantes entre elles diffusent leurs séquences d'informations codées sous forme de messages à l'attention d'un seul destinataire et en présence de relais. Les relais de type « *Half Duplex* » (HD, (c'est-à-dire qu'un relais ne peut recevoir et transmettre simultanément)) reçoivent les messages des sources, les décodent et génèrent un message uniquement à partir des messages des sources décodés sans erreur. Les relais accèdent ensuite au canal de manière orthogonale entre eux pour transmettre leur message vers la destination. La sélectivité des relais fait qu'un relais ne transmet un message que s'il décode au moins une source sans erreur. Les liens entre les différents nœuds du système MARC ou MAMRC sont sujets à des évanouissements lents (slow fading en anglais) et à du bruit blanc Gaussien. Un retour (feedback) limité est autorisé depuis la destination vers les sources et vers les relais. La retransmission d'une source demandée dans le signal de retour se traduit en l'émission d'une redondance basée sur un codage incrémental aux sources.

## Art antérieur

Parmi les techniques dites « Sélective Decode and Forward (SDF) », il est connu de [1] un procédé pour améliorer le relayage SDF pour des systèmes MARC. Les auteurs considèrent un système à deux sources A et B, un relais R et une destination D dans lequel chaque nœud est half-duplex, il ne peut recevoir et émettre en même temps et dans lequel l' accès au canal entre tous les nœuds est orthogonal selon un mode de division du temps, TDD (Time Division Duplex). Le relais effectue un codage de réseau, de type OU exclusif XOR comme illustré par la figure 3.

Selon le procédé décrit les sources A, B codent leurs données en un mot de longueur N partitionné en deux trames, une trame dite de données et une trame dite de redondance incrémentale. Les sources émettent successivement leur trame de données. Le relais R et la destination D décodent les trames reçues. En testant le CRC (Cyclic Redundancy Check selon la terminologie anglosaxonne), le relais et la destination déterminent si le décodage est correct. Le relais ou la destination transmettent une information de retour (feedback) basée sur leur résultat de décodage des trames reçues. Si le décodage est correct le retour est un message ACK. Si le décodage est erroné le message de retour est un NACK avec une demande de retransmission. Le message de retour comprend deux bits, un pour la source A, un pour la source B.

Si la destination retourne un ACK pour les deux sources alors les sources débutent un nouveau cycle avec les données qui suivent. Les sources émettent successivement leur trame de données.

Sinon, la destination retourne un NACK pour une ou les deux sources en fonction de son résultat de décodage. Soit le relais effectue une retransmission vers la destination, soit si le relais ne peut aider la destination, la source correspondante retransmet la trame originale dans le cycle suivant.

Les auteurs distinguent trois cas pour la retransmission du relais R. Selon le premier cas, la destination D décode correctement uniquement la source B et R décode correctement uniquement la source A, ou D décode correctement ni A, ni B et R décode correctement uniquement A. Dans ce cas, R régénère la trame de redondance incrémentale $I_A$ à partir des données décodées de A et transmet $I_A$ à la destination. Selon le deuxième cas, D décode correctement uniquement A et R décode correctement uniquement B, ou D décode correctement ni A, ni B et R décode correctement uniquement B. Dans ce cas, R régénère la trame de redondance incrémentale $I_B$ à partir des données décodées de B et transmet $I_B$ à la destination. Selon le troisième cas, D décode correctement ni A, ni B et R décode correctement A et B. Dans ce cas, R régénère les trames de redondance incrémentale $I_A$ et $I_B$ à partir des données décodées de A et de B, effectue un codage réseau des deux trames et transmet le signal codé à la destination.

La destination combine la trame de redondance incrémentale avec la trame de données stockée et effectue un décodage à décision souple.

Selon le procédé décrit, le relais doit prendre une décision pour retransmettre ou pas en fonction du retour de la destination et de son décodage et les sources doivent prendre une décision pour retransmettre ou pour transmettre de nouvelles données en fonction du retour de la destination et du retour du relais.

Le document US2006/0291440 décrit un procédé de relayage de messages par un relais destiné à un système de télécommunication à M sources, L relais et une destination, selon un schéma d'accès multiple orthogonal du canal de transmission entre les L relais et la destination, comprenant les étapes : décodage par un relais de M messages chacun associé à une trame et provenant d'une source parmi les M sources avec détection d'erreurs sur les messages, transmission du relais vers la destination d'un signal représentatif d'un paquet incluant un jeu des messages pour lesquels aucune erreur n'a été détectée par le relais, le paquet étant précédé d'un entête indiquant le jeu de messages pour lesquels aucune erreur n'a été détectée par ce relais.

## Caractéristiques principales de l'invention

La présente invention tend à améliorer l'efficacité de décodage à la destination tout en limitant l'occupation du canal de transmission et le retour (feedback) depuis la destination ou depuis le relais.

A cet effet, la présente invention a pour objet un procédé de relayage de messages par un relais half-duplex destiné à un système de télécommunication à M sources, L relais et une destination, $M>1$, $L\geq1$, selon un schéma d'accès multiple orthogonal du canal de transmission entre les L relais et la destination. Le procédé comprend les étapes suivantes :

- décodage par un relais de M messages chacun associé à une trame et provenant d'une source parmi les M sources avec détection d'erreurs sur les messages,
- transmission du relais vers la destination d'un signal représentatif d'au moins une partie du jeu des messages pour lesquels aucune erreur n'a été détectée par le relais sous condition d'une autorisation provenant de la destination,
- transmission du relais vers la destination d'un signal de contrôle indiquant un jeu de messages pour lesquels aucune erreur n'a été détectée par ce relais, la transmission du relais vers la destination du signal de contrôle intervenant avant la transmission du signal représentatif.

La destination émet une autorisation à un relais d'émettre son signal représentatif uniquement si elle n'a pas pu décoder sans erreur les M messages des M sources. Ainsi, la transmission du signal représentatif de chaque relais n'est pas systématique contrairement aux techniques connues mais conditionnée à l'autorisation de la destination. Comme la destination dispose de la connaissance du jeu de messages décodés sans erreur par chaque relais, elle peut déterminer lequel ou lesquels des relais peuvent l'aider dans son décodage et donc les autoriser à transmettre leur signal représentatif. Ainsi, le procédé permet d'atteindre une efficacité maximale en évitant toute occupation du canal par une transmission d'un ou de plusieurs relais qui n'aideraient pas le décodage à la destination. Dès que la destination a pu décoder sans erreur les messages des sources, elle peut ainsi ne plus autoriser de transmission par les relais pour éviter toute perte de temps. Par conséquent, le canal peut être accessible très rapidement après la transmission par les sources de leur message pour une émission de nouveaux messages par les sources.

Selon un mode de réalisation du procédé de relayage, le schéma d'accès multiple orthogonal partage l'accès au canal en deux phases, une première phase de M time slots correspondant à la transmission des M messages par les M sources, une seconde phase de longueur variable correspondant aux transmissions conditionnelles des relais.

Pendant la seconde phase le nombre de nœuds relais autorisé à émettre est variable.

Selon un mode de réalisation du procédé de relayage, l'autorisation provenant de la destination comprend une identification d'un nœud sélectionné autorisé à transmettre.

Ce nœud peut être un relais parmi les L relais. Ce peut tout aussi bien être une source qui soit autorisée à réémettre son message pendant la seconde phase.

Selon un mode de réalisation du procédé de relayage, l'autorisation provenant de la destination comprend en outre une indication d'un jeu de messages à sélectionner par le relais parmi son jeu de messages détectés sans erreur pour générer son signal représentatif.

Ce mode est plus particulièrement adapté à un système avec plusieurs relais dit MAMRC. Selon ce mode, la destination non seulement autorise le relais mais en outre elle lui indique parmi son jeu de messages décodés sans erreur ceux des messages qu'il doit utiliser pour générer son signal représentatif. Ceci permet de diminuer la complexité de décodage de ce signal par la destination et par les autres relais. En outre, cette indication provenant de la destination permet au relais d'ajuster au mieux ses ressources allouées au codage de ce signal.

Selon un mode de réalisation du procédé de relayage, l'autorisation provenant de la destination comprend en outre des signaux de contrôle nominatifs indiquant un décodage correct ou pas de chacun des M messages et dans lequel le signal représentatif transmis est généré à partir d'un jeu de messages mis à jour à partir des signaux de contrôle nominatifs reçus.

Selon ce mode, la destination informe qu'elle a décodé correctement le message d'une source au moyen d'un signal de contrôle. La réception par le relais de ce signal lui permet d'ajuster sa ressource de décodage et de détection d'erreur aux seuls messages non encore décodés sans erreur par la destination. Selon ce mode, le signal représentatif est généré à partir des messages pour lesquels aucune erreur n'a été détectée par le relais mais en écartant les messages déjà correctement décodés par la destination ce qui permet d'alléger le codage au relais et le décodage à la destination.

Selon un mode de réalisation du procédé de relayage, le relais émet le jeu mis à jour à partir des signaux de contrôle nominatifs reçus.

Selon un mode de réalisation du procédé de relayage, le relais transmet le jeu non mis à jour à partir des signaux de contrôle nominatifs reçus.

Selon un mode de réalisation du procédé de relayage, la seconde phase peut comprendre des transmissions conditionnelles des sources sous condition d'une autorisation provenant de la destination.

Les relais peuvent se trouver dans des conditions de propagation radio peu favorables qui font qu'aucun des relais n'a pu décoder sans erreur un message décodé avec erreur par la destination. Dans ces conditions, la transmission d'un signal représentatif par les relais n'apporterait pas de connaissance supplémentaire à la destination, cette dernière a donc intérêt à solliciter une transmission des sources pour lesquelles le récepteur n'a pas réussi à décoder leur message sans erreur. Cette transmission s'appuie sur un codage incrémental aux sources. La transmission par les sources consiste alors à émettre une partie de redondance.

Selon un mode de réalisation du procédé de relayage, le relais décode M autres messages provenant respectivement des $M$ sources et associés chacun à une autre trame dès réception d'un signal de contrôle provenant de la destination indiquant un décodage correct des M messages.

Selon ce mode, la destination émet l'équivalent d'un signal ACK qui indique qu'elle a décodé sans erreur tous les messages des sources. A réception de ce signal, les sources comprennent qu'elles peuvent donc chacune basculer sur une nouvelle trame et émettre leur message associé qui va être décodé par le relais.

La présente invention a en outre pour objet un relais destiné à un système de télécommunication à M sources, L relais et une destination, l'accès au canal de transmission entre les relais et la destination suivant un schéma d'accès multiple orthogonal, pour la mise en œuvre d'un procédé de relayage selon un objet de l'invention. Le relais comprend :

- un décodeur de M messages émis par les M sources pour obtenir des messages estimés et pour détecter des erreurs sur les messages estimés,
- un codeur réseau pour générer un signal représentatif d'au moins une partie du jeu des messages estimés sans erreur,
- un émetteur pour émettre un signal de contrôle indiquant le jeu des messages pour lesquels aucune erreur n'a été détectée par le relais et pour émettre le signal représentatif,
- un contrôleur de l'émetteur pour que la transmission du signal de contrôle intervienne avant la transmission du signal représentatif et pour que la transmission du signal représentatif soit sous condition d'une autorisation provenant de la destination.

La présente invention a en outre pour objet un dispositif destinataire destiné à un système de télécommunication comprenant M sources, L relais et le dispositif, l'accès au canal de transmission entre les relais et le dispositif suivant un schéma d'accès multiple orthogonal. Le dispositif comprend :

- un décodeur de messages émis par les sources pour obtenir des messages estimés et pour détecter des erreurs sur les messages estimés,
- un récepteur des signaux de contrôle émis par les relais pour déterminer pour chaque relais le jeu des messages pour lesquels aucune erreur n'a été détectée par ce relais,
- un émetteur pour émettre une autorisation d'émettre à un relais si son jeu de messages comprend un des messages estimés avec erreur par le dispositif.

La présente invention a en outre pour objet un procédé de réception de messages par un destinataire destiné à un système de télécommunication à M sources, L relais et le destinataire, l'accès au canal de transmission entre les relais et le destinataire suivant un schéma d'accès multiple orthogonal. Le procédé comprend les étapes suivantes :

- décodage de messages émis par les sources pour obtenir des messages estimés et pour détecter des erreurs sur les messages estimés,
- réception de signaux de contrôle émis par les relais pour déterminer pour chaque relais un jeu de messages pour lesquels aucune erreur n'a été détectée par ce relais,
- émission d'une autorisation d'émettre à un relais si son jeu de messages comprend un des messages estimés avec erreur par le destinataire.

La présente invention a en outre pour objet un système à M sources, L relais et un destinataire, $M \geq 1$, $L \geq 1$, dans lequel les relais sont selon un objet précédent et le destinataire selon un autre objet précédent.

La présente invention a en outre pour objet un procédé d'émission de messages par une source parmi M sources destiné à un système de télécommunication comprenant les M sources, L relais et un destinataire, l'accès au canal de transmission entre les relais et le destinataire suivant un schéma d'accès multiple orthogonal selon un partage de l'accès au canal en deux phases formant une trame, une première phase de M time slots correspondant à la transmission des M messages par les M sources, une seconde phase de longueur variable correspondant à des transmissions conditionnelles de nœuds pris parmi les L relais et les M sources. Le procédé comprend les étapes suivantes :

- après l'émission d'un message courant associé à une trame courante, l'émission successive d'un message suivant associé à une trame suivante sous réserve d'un retour indiquant que la destination a correctement décodé les M messages courant ou sous réserve que la durée maximale de la trame courante est dépassée,
- une réémission du message courant conditionnellement à une autorisation provenant de la destination.

Selon le procédé d'émission, la source émet son message courant pendant la première phase de la trame courante. Il en est de même pour les M-1 autres sources qui partagent l'accès au canal. A la fin de la seconde phase de la trame courante, la source passe au message suivant, c'est-à-dire celui qui vient après le message courant qui a été émis pendant la première phase. Il en est de même pour les M-1 autres sources ; les M sources émettent le message qui suit le message courant à chaque première phase de la trame qui suit la trame courante. Lors de la seconde phase de la trame courante, chacune des sources peut être susceptible de réémettre son message courant sous condition d'une autorisation provenant de la destination.

Selon un mode de réalisation de l'invention, le schéma d'accès multiple orthogonal partage l'accès au canal en deux phases, une première phase de M time slots correspondant à la transmission des M messages par les M sources, une seconde phase de longueur variable correspondant aux transmissions conditionnelles des nœuds pris parmi les L relais et M sources.

Selon un mode de réalisation de l'invention, le décodage à la destination ainsi que la génération de messages de retour résultent d'une application logicielle spécifique mémorisée dans la destination, un récepteur d'une station de base par exemple. L'exécution de cette application logicielle est apte à la mise en œuvre du procédé de réception. L'application logicielle peut être découpée en plusieurs applications, par exemple une pour la partie décodage, une pour la partie messages de retour.

Selon un mode de réalisation de l'invention, le décodage, la génération d'un signal représentatif et d'un signal de contrôle au relais résulte d'une application logicielle spécifique mémorisée dans le relais. L'exécution de cette application logicielle est apte à la mise en œuvre du procédé de relayage. L'application logicielle peut être découpée en plusieurs applications, par exemple une pour la partie décodage et génération de signal, une pour la partie message de contrôle.

L'invention a en outre pour objet chacune des applications logicielles spécifiques sur un support d'informations, lesdites applications comportant des instructions de programme adaptées à la mise en œuvre respectivement d'un procédé de relayage et d'un procédé de réception lorsque ces applications sont exécutées par des processeurs.

L'invention a en outre pour objet des mémoires configurées comportant des codes d'instructions correspondant respectivement à chacune des applications spécifiques.

La mémoire peut être incorporée dans n'importe quelle entité ou dispositif capable de stocker le programme. La mémoire peut-être de type ROM, par exemple un CD ROM ou une ROM de circuit microélectronique, ou encore de type magnétique magnétique, par exemple une clé USB ou un disque dur.

D'autre part, chaque application spécifique selon l'invention peut être téléchargée depuis un serveur accessible sur un réseau de type Internet.

Les caractéristiques optionnelles présentées ci-dessus dans le cadre du procédé de relayage peuvent éventuellement s'appliquer au relais, à l'application et à la mémoire ci-dessus évoqués.

La présente invention se rapporte également à un système de communication comprenant au moins un relais et un destinataire selon respectivement un des objets précédents.

**Liste des figures**

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

- la figure 1 est un schéma d'un système dit MARC (Multiple Access Relay Channel) selon l'art antérieur,
- la figure 2 est un schéma d'un système dit MAMRC (Multiple Access Multiple Relays Channel) selon l'art antérieur,
- la figure 3 est un schéma d'un système dit MARC (Multiple Access Relay Channel) selon l'art antérieur avec un codage réseau XOR au relais, la destination étant une station de base,
- la figure 4 est un schéma d'un système dit MARC mettant en œuvre un procédé selon l'invention,
- la figure 5 illustre un premier mode de réalisation du procédé selon la présente invention ;
- la figure 6 illustre un deuxième mode de réalisation du procédé selon la présente invention
- la figure 7 illustre une première stratégie de sélection de nœud selon la présente invention ;
- la figure 8 illustre un mode de réalisation d'un procédé de réception mis en œuvre par la destination $D$ selon l'invention ;
- la figure 9 est un schéma d'un relais $R$ selon l'invention ;
- la figure 10 est un schéma d'un dispositif destinataire $D$ selon l'invention ;
- la figure 11 regroupe les courbes de débit $\eta$ des différentes stratégies de retour selon l'invention ;
- la figure 12 regroupe les courbes de probabilité de coupure commune $Pr\{E_{T_{max}}\}$ à la destination.

**Description de modes de réalisation particuliers**

L'invention est décrite dans le contexte d'un système MAMRC illustré par la figure 4. Ce système comprend M sources, L relais et une destination $D$.
A titre de simplification de la description, les suppositions suivantes sont faites par la suite sur le réseau MAMRC (« *Multiple -Access Multiple -Relay Channel* ») :

- les sources, les relais sont équipés d'une seule antenne d'émission ;
- les relais, et la destination sont équipés d'une seule antenne de réception ;
- les sources, les relais, et la destination sont parfaitement synchronisés ;
- les sources sont statistiquement indépendantes (il n'y a pas de corrélation entre elles) ;
- il est fait usage d'un code CRC supposé inclus dans les k bits d'information de chaque source pour savoir si un message est correctement décodé ou pas ;
- les liens entre les différents nœuds souffrent de bruit additif et d'évanouissement.

Les gains d'évanouissement sont fixes pendant une trame de durée maximale M + $T_{max}$ slots temporels, mais peuvent changer d'une trame à une autre. $T_{max} \geq L$ est un paramètre du système ;

- la qualité du canal en réception (CSIR Channel State Information at receiver) est disponible à la destination et aux relais ;
- les retours sont sans erreur (pas d'erreur sur les signaux de contrôle) ;
- tous les slots temporels ont une même durée.

Les sources, nœuds $S_i$, $i \in \{1,..., M\}$, diffusent leurs séquences d'informations codées à l'attention des relais, nœuds $R_j$, $j \in \{1,..., L\}$ et d'une destination, nœud $D$. Les M sources accèdent au canal de transmission vers les relais et la destination selon un schéma d'accès multiple orthogonal ou non orthogonal (utilisation d'une même ressource radio). La description qui suit considère un accès orthogonal des sources.
Les L relais accèdent au canal de transmission vers la destination selon un schéma d'accès multiple orthogonal qui leur permet d'écouter sans interférence les transmissions des autres relais.
Une trame utilise des slots temporels (time slots) pour transmettre les M messages de respectivement M sources. La durée maximale d'une trame est de M + $T_{max}$ slots temporels. Au sein d'une même trame, les transmissions sont divisées en deux phases. La première phase comprend M slots temporels pendant lesquels les sources émettent chacune à leur tour leur paquet de $K$ bits d'information noté $u_{S_i}$,

$$u_{S_i} \in \mathbb{F}_2^K,$$

$i \in \{1,..., M\}$. Les symboles modulés transmis $x_{S_i}$ ont des longueurs $N_1$ et les sources sont supposées statistiquement indépendantes ($F_2$ étant le corps de Galois à deux éléments). Chaque slot temporel a une durée de $N_1$ utilisations du canal (channel uses).

Pendant l'utilisation $k$ du canal (channel use), le signal transmis en bande de base par le nœud $A \in \{S_1, ..., S_M, R_1, ..., R_L\}$ et reçu par le nœud $B \in \{R_1, ..., R_L, D\}$ est noté $y_{A,B,k}$, le gain statique de canal entre les nœuds $A$ et $B$ est noté $h_{A,B}$, le bruit blanc AWGN est noté $n_{A,B,k}$, et le symbole modulé transmis $x_{A,k}$ qui est un complexe, $x_{A,k} \in \mathbb{C}$. Lorsqu'une source émet, les relais ainsi que la destination écoutent et tentent de décoder les messages reçus à la fin de chaque slot (round).

Chaque message $x_{S_1}, ..., x_{S_M}$ correspondant à une source $S_1, ..., S_M$, un message correctement décodé est assimilé à la source correspondante par abus de notation.

Par convention, on note $S_{B,t}$ le jeu des messages (ou sources) correctement décodés par le nœud $B \in \{R_1, ..., R_L, D\}$ à la fin du slot $t$. Par souci de simplicité dans la description des algorithmes, il est convenu que $S_{S,t} = \{S\}$ pour $S = S_1, ..., S_M$.

Pendant la première phase, et pendant le slot temporel attribué à la source $S_i$, $i = 1,.., M$, le signal reçu au nœud $B$ peut s'écrire :

$$y_{S_i,B,k} = h_{S_i,B} x_{S_i,k} + n_{S_i,B,k} \tag{1}$$

avec $k = 1, ..., N_1$.

A la fin de la première phase, le jeu des messages (ou sources) correctement décodés par le nœud $B \in \{R_1, ..., R_L\} \cup \{D\}$ est noté $S_{B,0}$. Le jeu $S_{B,0}$ pour $B \in \{R_1, ..., R_L\}$ est identifié dans un signal de contrôle émis par le nœud $B \in \{R_1, ..., R_L\}$.

La deuxième phase comprend au maximum $T_{max}$ slots temporels (rounds) $T_{max} \geq L$. Chaque slot (round) $t \in \{1, ..., T_{max}\}$ a une durée de $N_2$ utilisations du canal. Un signal de contrôle identifie le jeu $S_{B,t} \subseteq \{S_1, ..., S_M\}$, $1 \leq t \leq T_{max}$, des messages (ou sources) correctement décodés par le nœud $B \in \{R_1, ..., R_L\}$ à la fin du slot temporel (round) $t$.

La destination $D$ décide du nombre de slots utilisés pendant la deuxième phase et du nœud qui transmet à chaque slot pendant cette phase dans le but de décoder correctement un maximum de messages des sources. Pendant cette phase les relais accèdent au canal selon un schéma d'accès multiple orthogonal, ils peuvent s'aider entre eux. Lorsqu'un relais émet, les autres relais ainsi que la destination écoutent et tentent de décoder les messages reçus à la fin du slot (round). Les relais qui écoutent peuvent exploiter le signal reçu pour améliorer leur jeu de messages correctement décodés. Un relais non actif agit comme la destination dans son processus de décodage. Ainsi, pendant le slot (round) $t \in \{1, ..., T_{max}\}$, soit $\hat{A}_t \in \{S_1, ..., S_M, R_1, ..., R_L\}$ le nœud sélectionné par la destination pour émettre, alors le signal reçu au nœud $B \in \{R_1, ..., R_L, D\} \setminus \{\hat{A}_t\}$ peut s'écrire :

$$y_{\hat{A}_t,B,k} = h_{\hat{A}_t,B} x_{\hat{A}_t,k} + n_{\hat{A}_t,B,k} \tag{2}$$

avec $k = 1, ..., N_2$.

Les coefficients de gain de canal $h_{A,B}$ pour tout $A \in \{S_1, ..., S_M, R_1, ..., R_L\}$ et $B \in \{R_1, ..., R_L, D\}$ pour A différent de B sont supposés indépendants et sont supposés suivre une distribution de probabilité gaussienne complexe circulaire de moyenne nulle et de variance $\gamma_{A,B}$, notée $CN(0, \gamma_{A,B})$. Les échantillons $n_{A,B,k}$ de bruit blanc AWGN additif suivent une distribution de probabilité (*pdf*) $CN(0,1)$. La puissance des symboles transmis (par dimension complexe) par les sources et par les relais est supposée normalisée à l'unité. $\gamma_{A,B}$ est la puissance moyenne reçue par le récepteur du nœud $B$ du signal émis par l'émetteur du nœud $A$. L'évanouissement et les pertes de trajet peuvent être inclus dans l'expression de la variance $\gamma_{A,B}$.

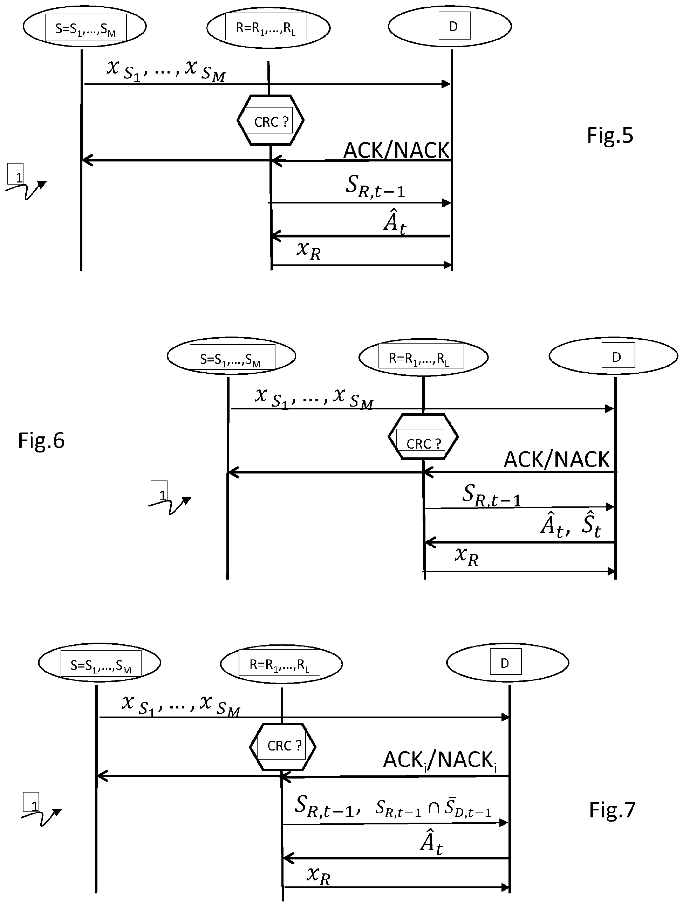

La Figure 5 illustre le procédé de relayage selon l'invention selon un mode de réalisation particulier. Le procédé de relayage de messages par un relais half-duplex comprend les étapes de décodage, de transmission d'un signal représentatif et de transmission d'un signal de contrôle.

Le relais $R = R_1, ..., R_L$ décode M messages provenant chacun d'une source parmi les M sources avec détection d'erreurs sur les messages. La détection d'erreur est faite classiquement en exploitant un CRC.

Le relais $R = R_1, ..., R_L$ transmet en début du slot (round) courant, $t$, vers la destination $D$ un signal de contrôle identifiant le jeu $S_{R,t-1} \subseteq \{S_1, ..., S_M\}$ des messages (par abus de notation assimilé aux sources correspondantes) pour lesquels aucune erreur n'a été détectée par le relais à la fin du slot (round) précédent, $t - 1$, $t \in \{1, ..., T_{max}\}$. Selon une réalisation particulière, le relais peut, s'il connait les messages décodés sans erreur à la destination à $t - 1$ ($S_{D,t-1}$), transmettre $S_{R,t-1} \cap \overline{S}_{D,t-1}$, avec $\overline{S}_{D,t-1} = \{S_1, ..., S_M\} \setminus S_{D,t-1}$ le complément de $S_{D,t-1}$ dans l'ensemble des sources.

La transmission du relais $R = R_1, ..., R_L$ vers la destination $D$ du signal de contrôle intervient avant la transmission d'un signal $x_R$ représentatif d'au moins une partie des messages du jeu pour lesquels aucune erreur n'a été détectée par le relais R.

Le relais $R = R_1, ..., R_L$ transmet le signal $x_R$ représentatif vers la destination $D$ uniquement sous condition d'une autorisation provenant de la destination. La destination émet son autorisation qui peut prendre différentes formes. Selon un premier mode illustré par les figures 5 et 6, la destination retourne un signal, ACK/NACK, de contrôle indiquant globalement qu'elle a ou n'a pas réussie à décoder toutes les sources sans erreur (basé sur la vérification du CRC) et, dans le cas où elle n'a pas réussie à décoder toutes les sources sans erreur, une identification du nœud $\hat{A}_t$ sélectionné qui doit retransmettre. Selon les modes de réalisation illustrés par les figures 5 et 6, le nœud sélectionné est un relais. Selon un deuxième mode illustré par la figure 7, la destination retourne un signal $ACK_i/NACK_i$ de contrôle particulier (dit nominatif) indiquant qu'elle a ou n'a pas réussie à décoder le message de la source $i$ sans erreur (basé sur la vérification du CRC) et, dans le cas où elle n'a pas réussie à décoder un message sans erreur, une identification du nœud $\hat{A}_t$ sélectionné pour retransmettre. Selon ce mode, le procédé distingue autant de signaux $ACK_i/NACK_i$ de contrôle différents que de nœuds sources.

Les relais reçoivent les signaux de contrôle ACK/NACK, $ACK_i/NACK_i$ diffusés par la destination vers les sources.

Un signal de contrôle est par opposition à un signal de données, un signal qui ne porte pas de données utiles (data) mais des informations de contrôle dites parfois hors-bande lorsque le signal est transmis avec des ressources fréquentielles distinctes de celles utilisées pour les données utiles.

Selon un mode particulier illustré par la figure 6, la destination sélectionne non seulement le nœud relais $\hat{A}_t$ qui doit émettre au slot (round) courant, $t$ mais en outre les messages du jeu $\hat{S}_t \subseteq S_{R,t-1}$ à transmettre par ce relais. En fonction du critère de décision de la destination, par exemple, minimiser la probabilité de l'événement $E_t$, cela peut être $S_{R,t-1}$ ou n'importe quel sous ensemble de $S_{R,t-1}$.

La sélection effectuée par la destination au slot (round) courant, $t$ tient compte de sa connaissance des gains $h = [h_{S_1,D}, ..., h_{S_M,D}, h_{R_1,D}, ..., h_{R_L,D}]$ et, en outre, de sa connaissance de ses sélections passées, des jeux de messages décodés correctement par les relais (par abus de notation assimilés aux sources correspondantes) et transmis par les derniers signaux de contrôle reçus et du jeu de messages qu'elle a décodé correctement (par abus de notation assimilés aux sources correspondantes) : $P_{t-1} = \{(\hat{A}_1, \hat{S}_1), ..., (\hat{A}_{t-1}, \hat{S}_{t-1})\} \cup \{S_{R,t-1}, \forall R \in \{R_1, ..., R_L\}\} \cup S_{D,t-1}$. Par convention, le jeu de connaissance $P_0$ rassemble uniquement $\{S_{B,0}, \forall B \in \{R_1, ..., R_L, D\}\}$ c'est-à-dire sa connaissance des jeux de messages décodés correctement par les relais à la fin de la première phase (transmis par les signaux de contrôle transmis par les relais à l'issue de la première phase) et sa connaissance du jeu de messages qu'elle a décodé correctement à l'issue de la première phase sur la base uniquement des signaux transmis par les sources.

Soit $E_t(h, A_t, S_t)$ l'événement à la destination conditionné à la connaissance de $h$ et de $P_{t-1}$, indiquant qu'au moins une source n'est pas décodée correctement par la destination à la fin du slot (round) $t$ au cours duquel le nœud $A_t$ est le nœud actif, $S_t$ étant le jeu des sources aidées par le nœud $A_t$. C'est-à-dire que le signal $x_{A_t}$ émis par le nœud $A_t$ est représentatif du jeu $S_t$ de messages détectés sans erreur par le relais $A_t$. De manière similaire, soit $O_{S,t}(h, A_t, S_t)$ l'événement à la destination indiquant que la source $S = S_1, ..., S_M$ n'est pas décodée correctement.

A chaque événement $A_t(h, \hat{A}_t, \hat{S}_t)$ est associée la probabilité $Pr\{A_t\}$ qui peut formellement être définie comme

$$\mathbb{E}_h\left(\mathbb{1}_{\{A_t(h,\hat{A}_t,\hat{S}_t)\}}\right)$$

avec

$$\mathbb{E}_h(.)$$

l'espérance sur $h$ et avec

$$\mathbb{1}_{\{A_t(h,\hat{A}_t,\hat{S}_t)\}} = 1 :$$

si $A_t(h, \hat{A}_t, \hat{S}_t)$ est vrai et

$$\mathbb{1}_{\{A_t(h,\hat{A}_t,\hat{S}_t)\}} = 0 \; :$$

si non. La probabilité $Pr\{A_t\}$ dépend des règles de sélection.

L'autorisation émise par la destination suit des règles de sélection basées sur une stratégie qui consiste à minimiser la probabilité $Pr\{E_t\}$ à chaque instant t=1,...,Tmax.

Soit $T$ le nombre de slots (round) conditionnel à $h$ et aux règles de sélection. Le nombre moyen de retransmissions peut être exprimé sous la forme :

$$\mathbb{E}(T) = \sum_{t=1}^{T_{max}} t Pr\{T = t\}$$
$$\mathbb{E}(T) = \sum_{t=1}^{T_{max}} t Pr\{E_{t-1} \cap \bar{E}_t\} + T_{max} Pr\{E_{T_{max}}\} \tag{3}$$
$$\mathbb{E}(T) = \sum_{t=1}^{T_{max}-1} Pr\{E_t\}$$

Les débits minimal et maximal de transmission (en nombre de bits par utilisation du canal (b.c.u.) sont définis comme étant égaux à : $R_{max} = K / N_1$ et $R_{min} = MR_{max} / (M + T_{max}\alpha)$ avec $\alpha = N_2 / N_1$. Le débit moyen de transmission peut exprimer sous la forme :

$$\bar{R} = MR_{max} / \left(M + \alpha\mathbb{E}(T)\right) \tag{4}$$

Le nombre espéré de bits d'information reçus pendant chaque trame est donné par :

$$\sum_{S\in\{ S_1,...,S_M\}} K\left(1 - Pr\{O_{S,T_{max}}\}\right)$$

Ainsi, l'efficacité spectrale peut être défini par :

$$\eta = \frac{1}{M}\bar{R} \sum_{S\in\{ S_1,...,S_M\}} K\left(1 - Pr\{O_{S,T_{max}}\}\right) \tag{5}$$

Les règles de sélection consistent donc à maximiser l'efficacité spectrale définie par l'équation (5).

Deux types de relais sont considérés ci-après pour illustrer les règles.

L'information mutuelle instantanée entre le nœud $A \in \{S_1, ..., S_M\} \cup \{R_1, ..., R_L\}$ qui émet et le nœud $B \in \{R_1, ..., R_L\} \cup \{D\}$ qui reçoit est notée $I_{A,B}$. Cette information mutuelle dépend de la valeur de l'évanouissement du canal $h_{A,B}$, du SNR $\gamma_{A,B}$, et de l'hypothèse de modulation à l'entrée du canal.

Le premier type est dit DCC/JDCD, codage de canal distribué/décodage conjoint de canal distribué (distributed channel coding/joint distributed channel decoding selon la terminologie anglosaxonne). Le deuxième type est dit JNCC/JNCD, codage conjoint de réseau et de canal/décodage conjoint de réseau et de canal (joint network channel coding/joint network channel decoding selon la terminologie anglosaxonne).

Pour le type DCC/JDCD, le signal représentatif émis par le relais sélectionné $\hat{A}_l$ est une concaténation de messages décodés correctement et qui correspondent chacun à une source décodée correctement et qui font donc partie du jeu sélectionné $\hat{S}_l$, $l \in \{1, ..., t - 1\}$.

En omettant le canal pour des raisons de simplification d'écriture, l'événement commun de coupure $E_t(A_t, S_t)$ peut s'exprimer sous la forme :

$$E_t(A_t,S_t) = \{R_{max} > I_t^c(A_t,S_t)\} \tag{6}$$

avec

$$I_t^c(A_t,S_t) = \min_{S\in\bar{S}_{D,t-1}} \left(I_{S,D} + \sum_{l=1}^{t-1} \frac{\alpha}{|\hat{S}_l|} I_{\hat{A}_l,D}\mathbb{1}_{\{S\in\hat{S}_l\}}\right) + \frac{\alpha}{|S_t|} I_{A_t,D}\mathbb{1}_{\{S\in S_t\}} \tag{7}$$

avec $\overline{S}_{D,t-1} = \{S_1, ..., S_M\}\backslash S_{D,t-1}$ le complément de $S_{D,t-1}$ dans l'ensemble des sources. L'événement de coupure individuel peut être exprimé de manière similaire sous la forme :

$$O_{S,t}(A_t, S_t) = \{R_{max} > I_t^S(A_t, S_t)\} \tag{8}$$

avec

$$I_t^S(A_t, S_t) = I_{S,D} + \sum_{l=1}^{t-1}\frac{\alpha}{|\hat{S}_l|} I_{\hat{A}_l,D} \mathbb{1}_{\{S\in\hat{S}_l\}} + \frac{\alpha}{|S_t|} I_{A_t,D}\mathbb{1}_{\{S\in S_t\}} \tag{9}$$

Pour le type JNCC/JNCD, le signal représentatif émis par le relais sélectionné $\hat{A}_l$ et les messages transmis par les sources correspondant au jeu sélectionné $\hat{S}_l$ forment un mode de code conjoint des messages des sources $\hat{S}_l$, $l \in \{1, ..., t-1\}$.

Dans ce cas, les expressions de $I_t^S(A_t, S_t)$ et de $I_t^c(A_t, S_t)$ sont données dans [2] et peuvent être exprimées sous la forme :

$$I_t^c(A_t, S_t) = \min_{\mathcal{U}\subseteq\bar{S}_{D,t-1}} \frac{1}{|\mathcal{U}|}\left(\sum_{S\in\mathcal{U}} I_{S,D} + \sum_{l=1}^{t-1} \alpha I_{\hat{A}_l,D} \mathbb{1}_{\{\mathcal{U}\cap\hat{S}_l\neq\emptyset\}} + \alpha I_{A_t,D}\mathbb{1}_{\{\mathcal{U}\cap S_l\neq\emptyset\}}\right) \tag{10}$$

$$I_t^S(A_t, S_t) = \max_{\mathcal{J}\subseteq\bar{S}_{D,t-1}} \min_{\mathcal{U}\subseteq\mathcal{J}:S\in\mathcal{U}} \frac{1}{|\mathcal{U}|}\left(\sum_{S\in\mathcal{U}} I_{S,D} + \sum_{l=1}^{t-1} \alpha I_{\hat{A}_l,D} \mathbb{1}_{\{\hat{C}_l\}} + \alpha I_{A_t,D}\mathbb{1}_{\{\mathcal{U}\hat{C}_t\}}\right) \tag{11}$$

avec

$$\bar{\mathcal{J}} = \bar{S}_{D,t-1} \setminus \mathcal{J},$$

avec

$$\hat{C}_l = \left\{\{\mathcal{U} \cap \hat{S}_l \neq \emptyset\} \, et \, \{\mathcal{J} \cap \hat{S}_l \neq \emptyset\}\right\}$$

avec

$$C_t = \left\{\{\mathcal{U} \cap S_t \neq \emptyset\} \, et \, \{\mathcal{J} \cap S_t \neq \emptyset\}\right\}$$

La maximisation de $I_t^c(A_t, S_t)$ pour chaque réalisation de canal $h$ conditionnelle à $P_{t-1}$ minimise la probabilité de coupure (outage) commune $Pr\{E_t\}$ qui est le critère retenu pour maximiser l'efficacité spectrale définie par l'équation (5). En effet, $Pr\{O_{s,t}\} \leq Pr\{E_t\}$ pour chaque source $S \in \{S_1, ..., S_M\}$.

Selon une première stratégie illustrée par la figure 5, si la destination n'a pas décodé correctement toutes les sources au début du slot courant $t = 1, ..., T_{max}$, elle émet un signal de retour ACK/NACK. A la réception de ce signal, les relais transmettent à la destination une version à jour de leur jeu de messages correctement décodés. La destination choisit le nœud $A_t \in \{R_1, ..., R_L\} \cup \overline{S}_{D,t-1}$ qui maximise $I_t^c\left(A_t, S_{A_t,t-1}\right)$. Dans ce cas, la règle de sélection du nœud peut être écrite sous la forme :

$$\hat{A}_t = arg \max_{A_t \in \{R_1,...,R_L\} \cup \{\bar{S}_{D,t-1}\}} I_t^c(A_t, S_{A_t,t-1}) \tag{12}$$

avec $\hat{S}_t = S_{\hat{A}_t,t-1}$, c'est-à-dire que le relais aide toutes les sources qu'il a correctement décodées.

Selon une deuxième stratégie bâtie sur la première stratégie et illustrée par la figure 6, la destination sélectionne un relais $\hat{A}_t$ et le jeu des sources $\hat{S}_t$ que le relais doit aider, c'est-à-dire que dans ce cas le relais génère son signal représentatif sur une partie seulement des messages décodés sans erreur si le jeu $\hat{S}_t$ est différent du jeu $S_{R,t-1}$. La règle de sélection du nœud et des sources peut être écrite sous la forme :

$$(\hat{A}_t, \hat{S}_t) = arg \max_{A_t \in \{R_1,...,R_L\} \cup \{\bar{S}_{D,t-1}\}, S_t \subseteq S_{A_t,t-1}} I_t^c(A_t, S_t) \tag{13}$$

Une troisième stratégie est basée sur la deuxième stratégie mais tente de réduire le besoin de signalisation (signaux de contrôle). Selon cette troisième stratégie illustrée par la figure 7, au début de chaque slot (round) $t$, la destination envoie un signal nominatif ACK$_i$/NACK$_i$ aux sources indiquant si elles sont ou pas décodées sans erreur. Les relais écoutent et peuvent ainsi en déduire le jeu $S_{D,t-1}$ de messages détectés sans erreur par la destination. Si ce jeu est complet alors les relais peuvent s'abstenir d'émettre leur signal de contrôle. Sinon, le jeu n'est pas complet, les relais émettent soit leur jeu $S_{R,t-1}$ de messages décodés sans erreur, soit une mise à jour de leur jeu $S_{R,t-1} \cap \bar{S}_{D,t-1}$ de messages décodés sans erreur via leur signal de contrôle. La destination sélectionne le nœud $A_t \in \{R_1, ..., R_L\} \cup \{\bar{S}_{D,t-1}\}$ sachant que ce nœud sélectionné va coopérer avec les sources de $S_{A_t,t-1} \cap \bar{S}_{D,t-1}$.

La règle de sélection peut ainsi se mettre sous la forme :

$$\hat{A}_t = arg \max_{A_t \in \{R_1,...,R_L\} \cup \{\bar{S}_{D,t-1}\}} I_t^c(A_t, \bar{S}_{D,t-1} \cap S_{A_t,t-1}) \tag{14}$$

avec $\hat{S}_t = \bar{S}_{D,t-1} \cap S_{\hat{A}_t,t-1}$, c'est-à-dire que le relais aide toutes les sources qu'il a correctement décodées moins celles déjà correctement décodées par la destination.

L'annexe A donne un pseudo code pour le déroulement de la sélection mise en œuvre par la destination selon la troisième stratégie.

La figure 8 illustre un mode de réalisation d'un procédé de réception mis en œuvre par la destination $D$ selon l'invention. L'illustration schématise le déroulement à partir de la fin de la première phase, c'est-à-dire des M slots. La destination décode tous les messages reçus et effectue un test du CRC de chacun des messages. En parallèle, chaque relais $R = R_1, ..., R_L$ transmet en début du slot (round) courant, $t$, vers la destination $D$ un signal de contrôle identifiant le jeu $S_{R,t-1} \subseteq \{S_1, ..., S_M\}$ des messages qu'il a décodé sans erreur.

Lorsque la destination a réussi à décoder toutes les sources sans erreur, branche Y issu du test du CRC, elle retourne aux sources et aux relais un signal, ACK, de contrôle indiquant globalement qu'elle a réussi à décoder toutes les sources sans erreur. Ce signal ACK indique la fin de la trame en cours. La transmission est alors poursuivie avec une nouvelle trame.

Lorsque la destination n'a pas réussi à décoder toutes les sources sans erreur, branche N issu du test du CRC, elle effectue un test sur le temps écoulé.

Lorsque le slot courant est le dernier des slots de la deuxième phase, alors elle se met en attente de la prochaine trame, Fin Tram, branche Y issu du test sur le slot, $slot = T_{max}$ ?

Lorsque le slot courant n'est pas le dernier des slots de la deuxième phase, alors elle transmet un signal NACK indiquant globalement qu'elle n'a pas réussi à décoder toutes les sources sans erreur et une sélection d'un nœud $\hat{A}_t$. Si ce nœud est un relais alors la sélection du nœud est enrichie d'une sélection d'un jeu $\hat{S}_t$ de messages.

La destination tente alors de décoder de nouveau les messages des sources en exploitant le signal transmis par le nœud $\hat{A}_t$, c'est-à-dire, si le nœud est une source alors le signal est la réémission du message de la source et si le nœud est un relais alors le signal est le signal représentatif du jeu.

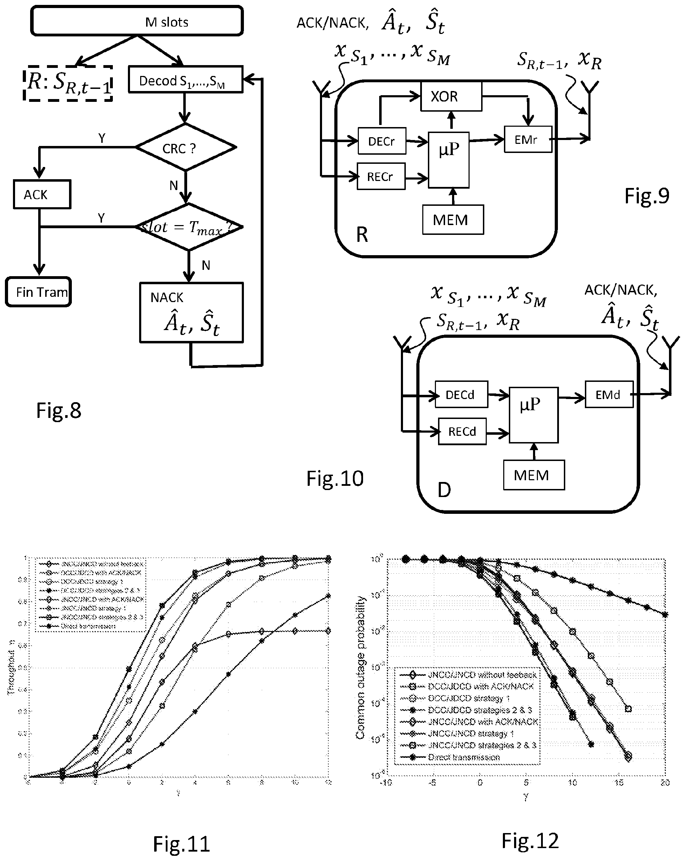

La figure 9 est un schéma d'un relais $R$ selon l'invention apte à coopérer avec M sources $S_1, ..., S_M$ et $L - 1$ relais $R_1, ..., R_{L-1}$ et une destination $D$ d'un système OMAMRC pour la mise en œuvre d'un procédé de relayage selon l'invention. Le procédé de relayage est mis en œuvre par l'activation d'une application logicielle spécifique suite par exemple à l'activation d'un icône avec raccourci affiché sur l'écran du relais.

Le relais $R$ comprend un récepteur REC, un décodeur DEC, un microprocesseur μP, un codeur réseau XOR, une mémoire MEM et un émetteur EM. L'application logicielle spécifique est mémorisée dans la mémoire MEM. L'exécution de cette application logicielle par le microprocesseur μP met en œuvre :

- le décodage par le décodeur DEC de M messages chacun associé à une trame et provenant d'une source parmi les M sources avec détection d'erreurs sur les messages,

- le codage réseau par le codeur réseau XOR d'au moins une partie $\hat{S}_t$ du jeu des messages pour lesquels aucune erreur n'a été détectée par le relais pour générer un signal représentatif $x_R$,
- la transmission par l'émetteur EM vers la destination du signal représentatif $x_R$ sous condition d'une autorisation ACK/NACK, $\hat{A}_t$ provenant de la destination,
- la transmission par l'émetteur EM vers la destination d'un signal de contrôle indiquant le jeu $S_{R,t-1}$ des messages pour lesquels aucune erreur n'a été détectée par ce relais, cette transmission du signal de contrôle intervenant avant la transmission du signal représentatif.

La figure 10 est un schéma d'un dispositif destinataire $D$ selon l'invention apte à coopérer avec $M$ sources $S_1, ..., S_M$ et $L$ relais $R_1, ..., R_L$ d'un système OMAMRC pour la mise en œuvre d'un procédé de relayage selon l'invention. Lors de cette coopération, le dispositif $D$ met en œuvre un procédé de réception de messages. Le procédé de réception de messages est mis en œuvre par l'activation d'une application logicielle spécifique suite par exemple à l'activation d'un icône avec raccourci affiché sur l'écran du dispositif.

Le dispositif $D$ comprend un récepteur REC, un décodeur DEC, un microprocesseur $\mu$P une mémoire MEM et un émetteur EM. L'application logicielle spécifique est mémorisée dans la mémoire MEM. L'exécution de cette application logicielle par le microprocesseur $\mu$P met en œuvre :

- le décodage par le décodeur DEC des messages émis par les sources $S_1 ..., S_M$ pour obtenir des messages estimés et pour détecter des erreurs sur les messages estimés,
- la réception par le récepteur REC de signaux de contrôle émis par les relais pour déterminer pour chaque relais le jeu $S_{R,t-1}$ des messages pour lesquels aucune erreur n'a été détectée par ce relais,
- l'émission par l'émetteur EM d'un message de retour ACK/NACK, $\hat{A}_t$ pour autoriser un relais à émettre si son jeu $S_{R,t-1}$ de messages comprend un des messages estimés avec erreur par le dispositif $D$.

Selon un mode de réalisation de l'application logicielle, sa mise en œuvre permet en outre le décodage par le décodeur DEC des signaux $x_R$ représentatifs transmis par les relais ainsi que l'indication dans le message de retour de la sélection du jeu $\hat{S}_t$ de sources que le relais doit aider.

Des simulations ont été effectuées avec, pour l'hypothèse d'une distribution gaussienne de la modulation en entrée, les conditions suivantes. Cette distribution en entrée maximise l'information mutuelle qui devient, par définition, la capacité et s'exprime sous la forme $I_{A,B} = \log(1 + |h_{A,B}|^2)$. Le système simulé est un système OMAMRC à trois sources, trois relais et une destination. Les paramètres sont $T_{max} = 3$, $R_{max} = 1$ (b.c.u.) et $\alpha = 0.5$.

La figure 11 regroupe les courbes de débit $\eta$ des différentes stratégies de retour selon l'invention, la courbe obtenue avec un système sans coopération sans retour et la courbe obtenue avec un système à coopération sans retour. Ces courbes de débit $\eta$ montrent qu'à haut SNR, le débit des transmissions directes (sans coopération des relais) devient supérieur aux transmissions sans retour (feedback). Le débit obtenu avec la stratégie à retour (selon l'invention) basée sur un relayage JNCC/JNCD dépasse celui de la stratégie à retour basée sur un relayage DCC/JDCD. Les résultats obtenus avec les deuxième et troisième stratégies selon l'invention atteignent des performances de débit équivalentes que ce soit pour un relayage JNCC/JNCD, que pour un relayage DCC/JDCD. Pour un relayage DCC/JDCD, les deuxième et troisième stratégies selon l'invention donnent les meilleures performances. Pour un relayage JNCC/JNCD, les deuxième et troisième stratégies selon l'invention ont des performances très proches de celles obtenues avec la première stratégie selon l'invention.

La figure 12 regroupe les courbes de probabilité de coupure commune $Pr\{E_{T_{max}}\}$ à la destination. Tous les schémas de coopération avec ou sans retour (feedback) ont le même ordre de diversité égal à $L + 1$ alors que le schéma sans coopération sans retour (transmission directe) a une diversité de un.

Chacune des sources peut par exemple être un terminal mobile d'un réseau de communication. Le relais peut par exemple être une station de base « allégée » ou un terminal, et le destinataire peut par exemple être une station de base.

En variante, chacune des sources peut par exemple être une station de base. Le relais peut par exemple être une station de base « allégée » ou un terminal, et le destinataire peut par exemple être un terminal.

Dans ces différentes configurations, le destinataire peut s'avérer être un nœud concentrateur, au sens où il reçoit des messages de l'ensemble des sources, apte à décoder tous les messages reçus de façon conjointe.

L'invention est décrite dans ce qui précède à titre d'exemple. Différentes variantes de l'invention peuvent être envisagées sans pour autant sortir du cadre du brevet.

Références :

[1] C. Lott, Milenkovic O, and E. Soljanin. Hybrid arq: Theory, state of the art and future directions. In IEEE Info. Theory Workshop on Info. Theory for Wireless Networks, 2007, July 2007

[2] Abdulaziz Mohamad, Raphael Visoz, and Antoine O. Berthet. Outage analysis of various coopérative stratégies for the multiple access multiple relay channel. In Proc. IEEE PIMRC'13, London, UK, September 2013.

Annexe A

A chaque début de round $t$

(initialisation)

$$I_{max} = 0$$

For chaque nœud $A_t \in \{R_1, ..., R_L\} \cup \{\bar{S}_{D,t-1}\}$ Do :

calcul $I_t^c\big(A_t, \bar{S}_{D,t-1} \cap S_{A_t,t-1}\big)$ en utilisant (7) ou (10)

if $I_t^c\big(A_t, \bar{S}_{D,t-1} \cap S_{A_t,t-1}\big) > I_{max}$ then

$$I_{max} = I_t^c\big(A_t, \bar{S}_{D,t-1} \cap S_{A_t,t-1}\big)$$

$$\hat{A}_t = A_t$$

End For

## Revendications

1.  Procédé (1) de relayage de messages par un relais half-duplex destiné à un système de télécommunication à M sources ($S_1$, ..., $S_M$), L relais ($R_1$, ..., $R_L$) et une destination (D), M>1, L≥1, selon un schéma d'accès multiple orthogonal du canal de transmission entre les L relais et la destination, comprenant les étapes suivantes :

    - décodage par un relais ($R_1$, ..., $R_L$) de M messages chacun associé à une trame et provenant d'une source parmi les M sources avec détection d'erreurs sur les messages,
    - transmission du relais ($R_1$, ..., $R_L$) vers la destination (D) d'un signal représentatif d'au moins une partie d'un jeu des messages pour lesquels aucune erreur n'a été détectée par le relais,

    **caractérisé en ce qu'**il comporte en outre :

    - transmission du relais ($R_1$, ..., $R_L$) vers la destination (D) d'un signal de contrôle indiquant un jeu ($S_{R,t-1}$, $S_{R,t-1} \cap \bar{S}_{D,t-1}$) de messages pour lesquels aucune erreur n'a été détectée par ce relais, cette transmission intervenant avant la transmission du signal représentatif et
    - la transmission du relais ($R_1$, ..., $R_L$) vers la destination (D) du signal représentatif intervient uniquement sous condition d'une autorisation provenant de la destination, l'autorisation comprenant une indication d'un jeu ($\hat{S}_t$) de messages détectés sans erreur à sélectionner par le relais pour générer le signal représentatif.

2.  Procédé (1) de relayage selon la revendication 1 dans lequel le schéma d'accès multiple orthogonal partage l'accès au canal en deux phases, une première phase de M time slots correspondant à la transmission des M messages par les M sources, une seconde phase de longueur variable correspondant aux transmissions conditionnelles des relais.

3.  Procédé (1) de relayage selon l'une des revendications 1 à 2 dans lequel l'autorisation provenant de la destination comprend une identification ($\hat{A}_t$) d'un nœud sélectionné autorisé à transmettre.

4.  Procédé (1) de relayage selon la revendication 3 dans lequel l'autorisation provenant de la destination comprend en outre des signaux de contrôle nominatifs ($ACK_i$/$NACK_i$) indiquant un décodage correct ou pas de chacun des M messages et dans lequel le signal représentatif transmis est généré à partir d'un jeu ($S_{R,t-1} \cap \bar{S}_{D,t-1}$) de messages mis à jour à partir des signaux de contrôle nominatifs reçus.

5. Procédé (1) de relayage selon la revendication 4 dans lequel le relais transmet le jeu ($S_{R,t\text{-}1}$) non mis à jour à partir des signaux de contrôle nominatifs reçus.

6. Procédé (1) de relayage selon la revendication 4 dans lequel le relais émet le jeu ($S_{R,t\text{-}1} \cap \overline{S}_{D,t\text{-}1}$) mis à jour à partir des signaux de contrôle nominatifs reçus.

7. Procédé (1) de relayage selon l'une des revendications 2 à 6, dans lequel la seconde phase peut comprendre des transmissions conditionnelles des sources sous condition d'une autorisation (ACK/NACK, ACK$_i$/NACK$_i$, $\hat{A}_t$) provenant de la destination.

8. Procédé (1) de relayage selon l'une des revendications 1 à 7 dans lequel le relais décode M autres messages provenant respectivement des M sources et associés chacun à une autre trame dès réception d'un signal de contrôle (ACK) provenant de la destination indiquant un décodage correct des M messages.

9. Relais ($R_1$, ..., $R_L$) destiné à un système de télécommunication à M sources ($S_1$, ..., $S_M$), L relais ($R_1$, ..., $R_L$) et une destination (D), l'accès au canal de transmission entre les relais et la destination suivant un schéma d'accès multiple orthogonal, pour la mise en œuvre d'un procédé de relayage selon l'une quelconque des revendications 1 à 9, comprenant :

  - un décodeur (DECr) de M messages émis par les M sources pour obtenir des messages estimés et pour détecter des erreurs (CRC) sur les messages estimés,
  - un codeur réseau (XOR) pour générer un signal représentatif d'au moins une partie ($\hat{S}_t$) du jeu des messages estimés sans erreur,
  - un émetteur (EMr) pour émettre un signal de contrôle indiquant le jeu ($S_{R,t\text{-}1}$) des messages pour lesquels aucune erreur n'a été détectée par le relais et pour émettre le signal représentatif,

  **caractérisé en ce qu'**il comprend en outre :

  - un contrôleur ($\mu$P) de l'émetteur pour que la transmission du signal de contrôle intervienne avant la transmission du signal représentatif et pour que la transmission du signal représentatif intervienne uniquement sous condition d'une autorisation provenant de la destination, l'autorisation comprenant une indication d'un jeu ($\hat{S}_t$) de messages détectés sans erreur à sélectionner par le relais pour générer le signal représentatif.

10. Dispositif destinataire (D) destiné à un système de télécommunication comprenant M sources ($S_1$, ..., $S_M$), L relais ($R_1$, ..., $R_L$) et le dispositif (D), l'accès au canal de transmission entre les relais et le dispositif suivant un schéma d'accès multiple orthogonal, le dispositif destinataire comprenant :

  - un décodeur (DECd) de messages émis par les sources pour obtenir des messages estimés et pour détecter des erreurs (CRC) sur les messages estimés,
  - un récepteur (RECd) des signaux de contrôle émis par les relais indiquant pour chaque relais le jeu des messages pour lesquels aucune erreur n'a été détectée par ce relais,
  - un émetteur (EMd) pour émettre une autorisation (NACK, $\hat{A}_t$) d'émettre à un relais si son jeu de messages comprend un des messages estimés avec erreur par le dispositif, l'autorisation comprenant une indication d'un jeu ($\hat{S}_t$) de messages détectés sans erreur à sélectionner par le relais pour générer le signal représentatif codé réseau,
  - un décodeur du signal représentatif codé réseau émis par le relais autorisé.

11. Procédé de réception de messages par un destinataire (D) destiné à un système de télécommunication à M sources ($S_1$, ..., $S_M$), L relais ($R_1$, ..., $R_L$) et le destinataire (D), l'accès au canal de transmission entre les relais et le destinataire suivant un schéma d'accès multiple orthogonal, le procédé comprenant les étapes suivantes :

  - décodage (decod) de messages émis par les sources pour obtenir des messages estimés et pour détecter des erreurs (CRC) sur les messages estimés,
  - réception de signaux de contrôle émis par les relais indiquant pour chaque relais le jeu ($S_{R,t\text{-}1}$) des messages pour lesquels aucune erreur n'a été détectée par ce relais,

- émission d'une autorisation (NACK, $\hat{A}_t$) d'émettre à un relais si son jeu de messages comprend un des messages estimés avec erreur par le destinataire, l'autorisation comprenant une indication d'un jeu ($\hat{S}_t$) de messages détectés sans erreur à sélectionner par le relais pour générer le signal représentatif codé réseau,
- décodage du signal représentatif codé réseau émis par le relais autorisé.

**12.** Système à M sources ($S_1$, ..., $S_M$), L relais ($R_1$, ..., $R_L$) et un destinataire (D), $M \geq 1$, $L \geq 1$, dans lequel les relais sont selon la revendication 9 et le destinataire selon la revendication 10.

**Patentansprüche**

**1.** Verfahren (1) zur Weiterleitung von Nachrichten durch ein Halbduplex-Relais, das für ein Telekommunikationssystem mit M Quellen ($S_1$, ..., $S_M$), L Relais ($R_1$, ..., $R_L$) und einem Ziel (D) bestimmt ist, M > 1, L $\geq$ 1, gemäß einem Schema des orthogonalen Mehrfachzugriffs auf den Übertragungskanal zwischen den L Relais und dem Ziel, die folgenden Schritte umfassend:

- Decodierung, durch ein Relais ($R_1$, ..., $R_L$), von M Nachrichten, die jeweils einem Rahmen zugeordnet sind und von einer Quelle von den M Quellen stammen, mit Detektion von Fehlern in den Nachrichten,
- Übertragung, vom Relais ($R_1$, ..., $R_L$) an das Ziel (D), eines Signals, das für wenigstens einen Teil eines Satzes von Nachrichten repräsentativ ist, für welche kein Fehler durch das Relais detektiert worden ist,

**dadurch gekennzeichnet, dass** es ferner Folgendes aufweist:

- Übertragung, vom Relais ($R_1$, ..., $R_L$) an das Ziel (D), eines Steuersignals, das einen Satz ($S_{R,t-1}$, $S_{R,t-1} \cap \overline{S}_{D,t-1}$) von Nachrichten anzeigt, für welche kein Fehler durch dieses Relais detektiert worden ist, wobei diese Übertragung vor der Übertragung des repräsentativen Signals erfolgt, und
- die Übertragung, vom Relais ($R_1$, ..., $R_L$) an das Ziel (D), des repräsentativen Signals ausschließlich unter der Bedingung einer von dem Ziel stammenden Autorisierung erfolgt, wobei die Autorisierung eine Anzeige eines Satzes ($\hat{S}_t$) von ohne Fehler detektierten Nachrichten umfasst, die durch das Relais auszuwählen sind, um das repräsentative Signal zu erzeugen.

**2.** Verfahren (1) zur Weiterleitung nach Anspruch 1, wobei das Schema des orthogonalen Mehrfachzugriffs den Zugriff auf den Kanal in zwei Phasen aufteilt, eine erste Phase von M Zeitschlitzen, die der Übertragung der M Nachrichten durch die M Quellen entspricht, und eine zweite Phase von variabler Länge, die den bedingten Übertragungen der Relais entspricht.

**3.** Verfahren (1) zur Weiterleitung nach einem der Ansprüche 1 bis 2, wobei die vom Ziel stammende Autorisierung eine Identifikation ($\hat{A}_t$) eines ausgewählten Knotens umfasst, der autorisiert ist zu senden.

**4.** Verfahren (1) zur Weiterleitung nach Anspruch 3, wobei die vom Ziel stammende Autorisierung außerdem namentliche Steuersignale (ACK$_i$/NACK$_i$) umfasst, die eine korrekte oder nicht korrekte Decodierung jeder der M Nachrichten anzeigen, und wobei das übertragene repräsentative Signal aus einem Satz ($S_{R,t-1} \cap \overline{S}_{D,t-1}$) von Nachrichten erzeugt wird, der anhand der empfangenen namentlichen Steuersignale aktualisiert wurde.

**5.** Verfahren (1) zur Weiterleitung nach Anspruch 4, wobei das Relais den Satz ($S_{R,t-1}$) überträgt, der nicht anhand der empfangenen namentlichen Steuersignale aktualisiert wurde.

**6.** Verfahren (1) zur Weiterleitung nach Anspruch 4, wobei das Relais den Satz ($S_{R,t-1} \cap \overline{S}_{D,t-1}$) sendet, der anhand der empfangenen namentlichen Steuersignale aktualisiert wurde.

**7.** Verfahren (1) zur Weiterleitung nach einem der Ansprüche 2 bis 6, wobei die zweite Phase bedingte Übertragungen der Quellen unter der Bedingung einer vom Ziel stammenden Autorisierung (ACK/NACK, ACK$_i$/NACK$_i$, $\hat{A}_t$) umfassen kann.

**8.** Verfahren (1) zur Weiterleitung nach einem der Ansprüche 1 bis 7, wobei das Relais M weitere Nachrichten, die jeweils von einer der M Quellen stammen und jeweils einem anderen Rahmen zugeordnet sind, nach dem Empfang eines vom Ziel stammenden Steuersignals (ACK), das eine korrekte Decodierung der M Nachrichten anzeigt, de-

codiert.

9. Relais ($R_1$, ..., $R_L$), welches für ein Telekommunikationssystem mit M Quellen ($S_1$, ..., $S_M$), L Relais ($R_1$, ..., $R_L$) und einem Ziel (D) bestimmt ist, wobei der Zugriff auf den Übertragungskanals zwischen dem Relais und dem Ziel gemäß einem Schema des orthogonalen Mehrfachzugriffs erfolgt, zur Durchführung eines Verfahrens zur Weiterleitung nach einem der Ansprüche 1 bis 8, umfassend:

- einen Decoder (DECr) für M Nachrichten, die von den M Quellen gesendet wurden, um geschätzte Nachrichten zu erhalten und um Fehler (CRC) in den geschätzten Nachrichten zu detektieren,
- einen Netzkodierer (XOR) zum Erzeugen eines Signals, das für wenigstens einen Teil ($\hat{S}_t$) des Satzes der ohne Fehler geschätzten Nachrichten repräsentativ ist,
- einen Sender (EMr) zum Senden eines Steuersignals, das den Satz ($S_{R,t-1}$) der Nachrichten anzeigt, für welche kein Fehler durch das Relais detektiert worden ist, und zum Senden des repräsentativen Signals,

**dadurch gekennzeichnet, dass** es außerdem umfasst:

- einen Controller ($\mu$P) des Senders, damit die Übertragung des Steuersignals vor der Übertragung des repräsentativen Signals erfolgt und damit die Übertragung des repräsentativen Signals ausschließlich unter der Bedingung einer von dem Ziel stammenden Autorisierung erfolgt, wobei die Autorisierung eine Anzeige eines Satzes ($\hat{S}_t$) von ohne Fehler detektierten Nachrichten umfasst, die durch das Relais auszuwählen sind, um das repräsentative Signal zu erzeugen.

10. Zielvorrichtung (D), welche für ein Telekommunikationssystem mit M Quellen ($S_1$, ..., $S_M$), L Relais ($R_1$, ..., $R_L$) und einer Vorrichtung (D) bestimmt ist, wobei der Zugriff auf den Übertragungskanals zwischen dem Relais und der Vorrichtung gemäß einem Schema des orthogonalen Mehrfachzugriffs erfolgt, wobei die Zielvorrichtung umfasst:

- einen Decoder (DECd) von Nachrichten, die von den Quellen gesendet wurden, um geschätzte Nachrichten zu erhalten und um Fehler (CRC) in den geschätzten Nachrichten zu detektieren,
- einen Empfänger (RECd) der von den Relais gesendeten Steuersignale, die für jedes Relais den Satz der Nachrichten anzeigen, für welche kein Fehler durch dieses Relais detektiert worden ist,
- einen Sender (EMd) zum Senden einer Autorisierung (NACK, $\hat{A}_t$) zum Senden an ein Relais, falls sein Satz von Nachrichten eine der Nachrichten umfasst, die durch die Vorrichtung mit Fehler geschätzt wurden, wobei die Autorisierung eine Anzeige eines Satzes ($\hat{S}_t$) von ohne Fehler detektierten Nachrichten umfasst, die durch das Relais auszuwählen sind, um das repräsentative netzcodierte Signal zu erzeugen,
- einen Decoder des repräsentativen netzcodierten Signals, das von dem autorisierten Relais gesendet wurde.

11. Verfahren zum Empfang von Nachrichten durch einen Adressaten (D), welches für ein Telekommunikationssystem mit M Quellen ($S_1$, ..., $S_M$), L Relais ($R_1$, ..., $R_L$) und dem Adressaten (D) bestimmt ist, wobei der Zugriff auf den Übertragungskanals zwischen dem Relais und dem Adressaten gemäß einem Schema des orthogonalen Mehrfachzugriffs erfolgt, wobei das Verfahren die folgenden Schritte umfasst:

- Decodierung (decod) von Nachrichten, die von den Quellen gesendet wurden, um geschätzte Nachrichten zu erhalten und um Fehler (CRC) in den geschätzten Nachrichten zu detektieren,
- Empfang von Steuersignalen, die von den Relais gesendet wurden und für jedes Relais den Satz ($S_{R,t-1}$) der Nachrichten anzeigen, für welche kein Fehler durch dieses Relais detektiert worden ist,
- Senden einer Autorisierung (NACK, $\hat{A}_t$) zum Senden an ein Relais, falls sein Satz von Nachrichten eine der Nachrichten umfasst, die durch den Adressaten mit Fehler geschätzt wurden, wobei die Autorisierung eine Anzeige eines Satzes ($\hat{S}_t$) von ohne Fehler detektierten Nachrichten umfasst, die durch das Relais auszuwählen sind, um das repräsentative netzcodierte Signal zu erzeugen,
- Decodierung des repräsentativen netzcodierten Signals, das von dem autorisierten Relais gesendet wurde.

12. System mit M Quellen ($S_1$, ..., $S_M$), L Relais ($R_1$, ..., $R_L$) und einem Adressaten (D), M $\geq$ 1, L $\geq$ 1, wobei die Relais Anspruch 9 entsprechen und der Adressat Anspruch 10 entspricht.

**Claims**

1. Method (1) for relaying messages by a half-duplex relay intended for a telecommunication system with M sources

$(S_1,...,S_M)$, L relays $(R_1,...,R_L)$ and a destination $(D)$, M>1, L≥1, according to a scheme for orthogonal multiple access of the transmission channel between the L relays and the destination, comprising the following steps:

- decoding by a relay $(R_1,...,R_L)$ of M messages each associated with a frame and originating from a source from among the M sources with detection of errors in the messages,
- transmission from the relay $(R_1,...,R_L)$ to the destination $(D)$ of a signal representative of at least one part of a set of those messages for which no error has been detected by the relay,

**characterized in that** it furthermore comprises:

- transmission from the relay $(R_1,...,R_L)$ to the destination $(D)$ of a control signal indicating a set $(S_{R,t-1}, S_{R,t-1} \cap \overline{S}_{D,t-1})$ of messages for which no error has been detected by this relay, this transmission occurring before the transmission of the representative signal, and
- the transmission from the relay $(R_1,...,R_L)$ to the destination $(D)$ of the representative signal occurs solely under condition of an authorization originating from the destination, the authorization comprising an indication of a set $(\hat{S}_t)$ of messages detected without error to be selected by the relay to generate the representative signal.

2. Relaying method (1) according to Claim 1, in which the orthogonal multiple access scheme divides the access to the channel into two phases, a first phase of M time slots corresponding to the transmission of the M messages by the M sources, a second phase of variable length corresponding to the conditional transmissions of the relays.

3. Relaying method (1) according to either of Claims 1 and 2, in which the authorization originating from the destination comprises an identification $(\hat{A}_t)$ of a selected node authorized to transmit.

4. Relaying method (1) according to Claim 3, in which the authorization originating from the destination furthermore comprises nominative control signals $(ACK_i/NACK_i)$ indicating correct decoding or otherwise of each of the M messages and in which the representative signal transmitted is generated on the basis of a set $(S_{R,t-1} \cap \overline{S}_{D,t-1})$ of messages updated on the basis of the nominative control signals received.

5. Relaying method (1) according to Claim 4, in which the relay transmits the set $(S_{R,t-1})$ not updated on the basis of the nominative control signals received.

6. Relaying method (1) according to Claim 4, in which the relay transmits the set $(S_{R,t-1} \cap \overline{S}_{D,t-1})$ updated on the basis of the nominative control signals received.

7. Relaying method (1) according to one of Claims 2 to 6, in which the second phase can comprise conditional transmissions of the sources under condition of an authorization $(ACK/NACK, ACK_i/NACK_i, \hat{A}_t)$ originating from the destination.

8. Relaying method (1) according to one of Claims 1 to 7, in which the relay decodes M other messages originating respectively from the *M* sources and each associated with another frame immediately upon receipt of a control signal (ACK) originating from the destination indicating correct decoding of the M messages.

9. Relay $(R_1,...,R_L)$ intended for a telecommunication system with M sources $(S_1,...,S_M)$, L relays $(R_1,...,R_L)$ and a destination $(D)$, access to the transmission channel between the relays and the destination following an orthogonal multiple access scheme, for the implementation of a relaying method according to any one of Claims 1 to 8, comprising:

- a decoder (DECr) of M messages transmitted by the M sources for obtaining estimated messages and for detecting errors (CRC) in the estimated messages,
- a network coder (XOR) for generating a signal representative of at least one part $(\hat{S}_t)$ of the set of the messages estimated without error,
- a transmitter (EMr) for transmitting a control signal indicating the set $(S_{R,t-1})$ of those messages for which no error has been detected by the relay and for transmitting the representative signal,

**characterized in that** it furthermore comprises:

- a controller ($\mu$P) of the transmitter so that the transmission of the control signal occurs before the transmission of the representative signal and so that the transmission of the representative signal occurs solely under condition of an authorization originating from the destination, the authorization comprising an indication of a set ($\hat{S}_t$) of messages detected without error to be selected by the relay to generate the representative signal.

10. Destination device ($D$) intended for a telecommunication system comprising M sources ($S_1,...,S_M$), L relays ($R_1,...,R_L$) and the device ($D$), access to the transmission channel between the relays and the device following an orthogonal multiple access scheme, the destination device comprising:

> - a decoder (DECd) of messages transmitted by the sources for obtaining estimated messages and for detecting errors (CRC) in the estimated messages,
> - a receiver (RECd) of the control signals transmitted by the relays indicating, for each relay, the set of those messages for which no error has been detected by this relay,
> - a transmitter (EMd) for transmitting an authorization (NACK, $\hat{A}_t$) to transmit to a relay if its set of messages comprises one of the messages estimated with error by the device, the authorization comprising an indication of a set ($\hat{S}_t$) of messages detected without error to be selected by the relay to generate the representative signal using network coding,
> - a decoder of the representative signal using network coding transmitted by the authorized relay.

11. Method for receiving messages by a destination ($D$) intended for a telecommunication system with M sources ($S_1,...,S_M$), L relays ($R_1,...,R_L$) and the destination ($D$), access to the transmission channel between the relays and the destination following an orthogonal multiple access scheme, the method comprising the following steps:

> - decoding (decod) of messages transmitted by the sources to obtain estimated messages and to detect errors (CRC) in the estimated messages,
> - reception of control signals transmitted by the relays indicating, for each relay, the set ($S_{R,t-1}$) of those messages for which no error has been detected by this relay,
> - transmission of an authorization (NACK, $\hat{A}_t$) to transmit to a relay if its set of messages comprises one of the messages estimated with error by the destination, the authorization comprising an indication of a set ($\hat{S}_t$) of messages detected without error to be selected by the relay to generate the representative signal using network coding,
> - decoding of the representative signal using network coding transmitted by the authorized relay.

12. System with M sources ($S_1,...,S_M$), L relays ($R_1,...,R_L$) and a destination ($D$), $M \geq 1$, $L \geq 1$, in which the relays are according to Claim 9 and the destination is according to Claim 10.

Fig.1

Fig.2

Fig.3

Fig.4

Fig.5

Fig.6

Fig.7

Fig.8

ACK/NACK, $\hat{A}_t$, $\hat{S}_t$

$x_{S_1}, \ldots, x_{S_M}$

$S_{R,t-1}$, $x_R$

Fig.9

$x_{S_1}, \ldots, x_{S_M}$

$S_{R,t-1}$, $x_R$

ACK/NACK, $\hat{A}_t$, $\hat{S}_t$

Fig.10

Fig.11

Fig.12

## RÉFÉRENCES CITÉES DANS LA DESCRIPTION

**Documents brevets cités dans la description**

- US 20060291440 A

**Littérature non-brevet citée dans la description**

- **C. LOTT ; MILENKOVIC O ; E. SOLJANIN.** Hybrid arq: Theory, state of the art and future directions. *IEEE Info. Theory Workshop on Info. Theory for Wireless Networks,* Juillet 2007

- **ABDULAZIZ MOHAMAD ; RAPHAEL VISOZ ; ANTOINE O. BERTHET.** Outage analysis of various coopérative stratégies for the multiple access multiple relay channel. *Proc. IEEE PIMRC'13,* Septembre 2013